# EUROPÄISCHE PATENTSCHRIFT

(11) **EP 0 711 588 B1**
(45) Veröffentlichungstag und Bekanntmachung des Hinweises auf die Patenterteilung: **30.05.2001**
(21) Anmeldenummer: 95113585.4
(22) Anmeldetag: 30.08.1995
(51) Int. Cl.: B01D 29/15

(54) **Filter, insbesondere Flüssigkeitsfilter**
Filter, especially liquid filter
Filtre, en particulier filtre de liquide

(30) Priorität: 08.11.1994 DE 4439815
(43) Veröffentlichungstag der Anmeldung: 15.05.1996
(73) Patentinhaber: FILTERWERK MANN & HUMMEL GMBH, 71631 Ludwigsburg (DE)
(72) Erfinder: Erdmannsdörfer, Hans, D-75335 Dobel (DE); Storz, Helmut, D-71726 Benningen (DE)
(74) Vertreter: Voth, Gerhard, Dipl.-Ing.

(56) Entgegenhaltungen:
- EP-A- 0 375 373
- EP-A- 0 376 443
- DE-U- 6 610 045
- FR-A- 789 682
- GB-A- 1 133 859
- US-A- 3 118 836

## Beschreibung

Die Erfindung betrifft ein Filter, insbesondere ein Flüssigkeitsfilter, nach dem Oberbegriff des Hauptanspruchs.

Aus der GB-A-22 26 254 ist ein konzentrisch aufgebautes Filter bekannt. Dieses besteht aus einem zickzack-förmig gefalteten Filterpapier, welches Endscheiben und Enddichtungen aufweist. Das Filterpapier ist auf einem Mittelrohr angeordnet. Zum Auffangen von Grobschmutz im eingebauten Zustand ist wenigstens eine der Endscheiben mit einem ringförmigen Auffangraum ausgestattet. Dieser ringförmige Auffangraum soll ein Absetzen von Grobschmutz im Filtergehäuse verhindern. Zur Vermeidung eines falschen Einbaus sind beide Endscheiben mit solch einem Auffangraum ausgestattet.

Ein Nachteil dieses Filtereinsatzes ist darin zu sehen, daß diese Art von Auffangraum, falls er wirklich auch in der Lage sein sollte größere Mengen von Grobschmutz zu sammeln, einen, gegenüber dem Durchmesser des Filtereinsatzes wesentlich größeren Durchmesser aufweisen muß. Damit erfordert das gesamte Filter einen relativ großen Bauraum.

Ein weiterer Nachteil ist außerdem darin zu sehen, daß dieser Auffangraum, da er durch die Endscheibe gebildet ist, nur eine sehr geringe Höhe aufweist und deshalb die Kapazität begrenzt ist.

Der Erfindung liegt die Aufgabe zugrunde, ein Filter mit einem Filtereinsatz zu schaffen, der eine wesentlich höhere Effizienz hinsichtlich des Zurückhaltens von Grobschmutz aufweist und bei welchem gleichzeitig der Filtereinsatz keinen höheren Aufwand an Bauraum erfordert.

Diese Aufgabe wird ausgehend von dem Oberbegriff des Hauptanspruchs durch dessen kennzeichnende Merkmale gelöst.

Der wesentliche Vorteil der Erfindung ist darin zu sehen, daß nicht die Endscheibe selbst den Auffangraum bildet, sondern sich über eine Teillänge des Filters ein Rohr erstreckt. Dieses Rohr, welches relativ eng an dem Filtereinsatz anliegt, nutzt die Kapazität des Filtervolumens aus. Das Filtervolumen ist beachtlich, da es sich um einen zickzack-förmig gefalteten Filtereinsatz handelt. Hier kann der Faltenabstand als Speichervolumen für den Grobschmutz herangezogen werden. Eine Art Ringwanne, wie im Stand der Technik beschrieben, ist deshalb bei der Erfindung nicht mehr erforderlich.

Gemäß einer vorteilhaften Ausgestaltung besteht das Rohr aus einem feinmaschigen Siebgewebe oder feinporigen Papier, oder feinporigen flexiblen Vlies. Die Maschenweite des Siebgewebes bzw. die Porengröße des Vlieses ist dabei so gewählt, daß ein Austritt von Schmutz zuverlässig verhindert wird. Der Vorteil des Siebgewebes oder des Vlieses besteht darin, daß beim Auswechseln des Filtereinsatzes, d.h. bei der Entnahme die hier noch im Filtereinsatz verbleibende Flüssigkeit relativ rasch abläuft und nicht mit dem Filtereinsatz herausgenommen und entsorgt werden muß.

Eine zu der oben beschriebenen Ausgestaltung des Rohres alternative Variante sieht vor, das Rohr aus gelochtem Blech oder gelochter Pappe herzustellen. Auch hier dient die Lochung dazu, die Flüssigkeit bei der Entnahme des Filtereinsatzes rasch ablaufen zu lassen.

Gemäß einer Weiterbildung der Erfindung ist innerhalb des Gehäuses ein Zuschaltfilter angeordnet. Dieses Zuschaltfilter hat die Aufgabe, bei stark verschmutztem Filtereinsatz, d.h., wenn der Differenzdruck zwischen der Rohflüssigkeitsseite und der Reinflüssigkeitsseite einen bestimmten Wert übersteigt, die Filtrierung der Flüssigkeit zu übernehmen. Hierzu ist ein Ventil, beispielsweise im Mittelrohr des Filtereinsatzes angeordnet. Dieses Ventil öffnet über das Zuschaltfilter einen Bypass, durch den die Flüssigkeit bei stark zugesetztem Hauptfilter strömt. Dieses Zuschaltfilter kann ebenfalls aus einem zickzackförmig gefalteten Filterelement oder aus einem Siebgewebe mit einer sehr geringen Maschenweite bestehen. Das Schmutzfangrohr verhindert beim Zuströmen des Öls zum Zuschaltfilter ein Abschwemmen der auf den Hauptfilter abdgelagerten Partikel.

Gemäß einer weiteren Ausgestaltung der Erfindung ist im Filtergehäuse ein Bodenablaufventil vorgesehen. Zum Austauschen des Filtereinsatzes wird zunächst ein Gehäusedeckel entfernt. Mit Entfernen dieses Gehäusedeckels kann beispielsweise über eine Mittelschraube das Bodenventil geöffnet werden.

Selbstverständlich besteht auch die Möglichkeit, dieses Bodenablaufventil mit dem Filtereinsatz zu koppeln, so daß ein öffnen erst dann möglich ist, wenn der Filtereinsatz aus dem Filtergehäuse entnommen wird.

Die Erfindung beschreibt auch einen Filtereinsatz, der mit einem Rohr umgeben ist, wobei dieses Rohr den Auffangraum für den Grobschmutz bildet. In einer Variante besteht dieses Rohr aus einem Siebgewebe oder aus einem flexiblen Vlies. Es besteht auch die Möglichkeit, ein Rohr an beiden Enden des Filtereinsatzes anzuordnen. Dadurch wird die Einbaulage des Filtereinsatzes unerheblich, das heißt der Einsatz kann in beliebiger Lage in das Gehäuse eingesetzt werden. In diesem Fall werden zwei Schmutzsammelräume gebildet, wobei nur ein Schmutzsammelraum während des Filterbetriebes funktionell benötigt wird.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand von Beispielen erläutert. Es zeigt:
- Figur 1: einen Filtereinsatz
- Figur 2: eine Variante des in Figur 1 gezeigten Filtereinsatzes
- Figur 3: ein Wechselfilter in einer Teilschnittdarstellung
- Figur 4: einen Filtereinsatz in einer weiteren Variante

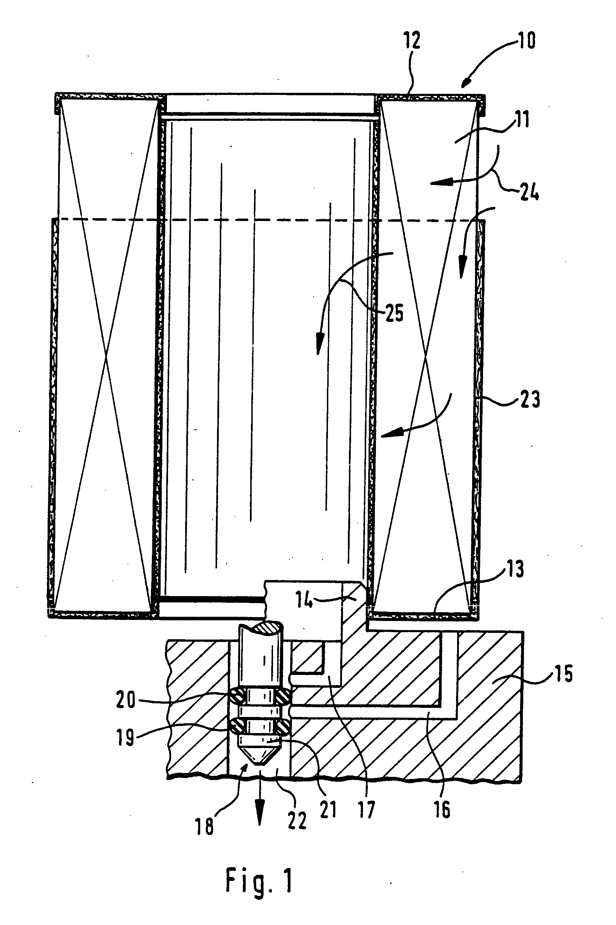

Der in Figur 1 gezeigte Filtereinsatz 10 besteht aus einem zick-zack-förmig gefalteten Filterelement 11. Der Filterwerkstoff ist beispielsweise Papier oder Siebgewebe oder Vlies. An den Stirnseiten ist das Filterelement 11 mit Endscheiben 12, 13 versehen. Diese Endscheiben erstrecken sich geringfügig nach innen in die Mittelöffnung und nach außen über den äußeren Umfang des Filterelements. Das Element 11 ist auf einem konzentrischen Ansatz 14 eines hier nur teilweise dargestellten Filtergehäuses 15 aufgesteckt und radial dichtend auf diesem Ansatz befestigt.

Der Zulauf 16 für die Rohflüssigkeit und der Ablauf 17 für die Reinflüssigkeit ist mit einem Bodenablaufventil oder Wartungsventil 18 ausgestattet. Beim Entfernen des Filtereinsatzes aus dem Gehäuse wird das Wartungsventil, d.h. der mit 0-Ringen 19, 20 versehene Verschlußstift 21 nach oben herausgezogen und gibt eine Ablaufbohrung 22 frei. Die rohseitig und reinseitig vorhandene Flüssigkeit läuft über diese Ablaufbohrung 22 ab und der Filtereinsatz 10 kann anschließend entnommen werden.

Zum Auffangen von Grobschmutz ist der Filtereinsatz 10 mit einer rohrförmigen Manschette oder einem Rohr 23 umhüllt. Dieses Rohr erstreckt sich von der unteren Endscheibe 13 aus bis auf Dreiviertel der Höhe des Filtereinsatzes. Das Rohr besteht beispielsweise aus einem Papier- oder Pappmaterial. Die zu reinigende Flüssigkeit strömt gemäß dem Pfeil 24 in das Filterelement ein, verteilt sich über die Filterfalten und verläßt gereinigt gemäß dem Pfeil 25 über die mittlere Öffnung des Filtereinsatzes und den Ablauf 17 die Filtereinrichtung. Sofern Grobschmutz mit der zu reinigenden Flüssigkeit mitgeführt wird, lagert sich dieser Grobschmutz in den Falten des Filtermediums ab. Bei der Herausnahme des Filtereinsatzes ist aufgrund des Rohrs 23 gewährleistet, daß dieser Grobschmutz nicht mit der abfließenden Flüssigkeit nach unten und damit in den Ablauf 17 oder die Ablaufbohrung 22 gelangt. Außerdem besteht auch nicht die Gefahr, daß sich der Grobschmutz innerhalb des Gehäuses anlagert.

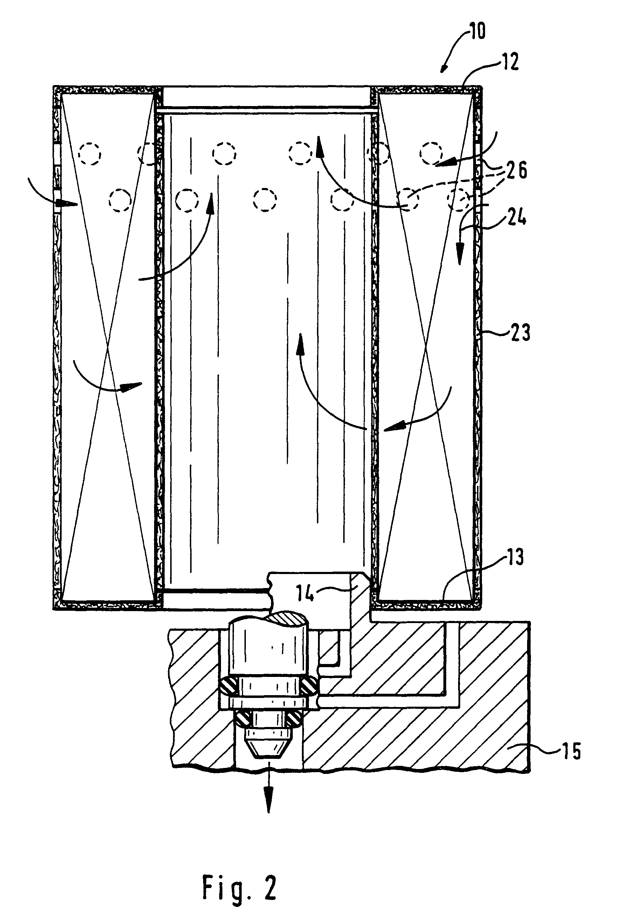

Die nachfolgend beschriebene Figur 2 zeigt eine Variante. Der Filtereinsatz 10 weist ebenfalls Endscheiben 12, 13 auf und ist auch hier über einen Ansatz 14 an dem nur teilweise dargestellten Filtergehäuse 15 befestigt. Das Rohr oder rohrförmige Element 23 erstreckt sich über die gesamte Außenfläche des Filtereinsatzes 10 und ist im oberen Bereich mit Öffnungen 26 versehen. Durch diese Öffnungen 26 strömt gemäß dem Pfeil 24 die zu reinigende Flüssigkeit. Auch bei dieser Variante setzt sich der über die Öffnungen 26 einströmende Grobschmutz innerhalb der Falten des Filtereinsatzes ab. Selbstverständlich sind die Öffnungen 26 so bemessen, daß maximal mögliche Grobschmutzteile zugeführt werden können. Die Faltenzwischenräume stellen dabei ein Reservoir oder einen Auffangraum für Grobschmutz dar.

Sowohl in Figur 1 als auch in Figur 2 kann das Rohr 23 aus einem flexiblen Siebgewebe oder Vlies bestehen. Dieses Siebgewebe hat den Vorteil, daß die Flüssigkeit, die sich noch im Filtereinsatz befindet, beim Herausnehmen desselben ablaufen kann.

Ein weiterer Vorteil eines solchen Siebgewebes besteht darin, daß es eine gewisse Durchmesserflexibilität aufweist und sich damit an die äußeren Abmessungen des Filtereinsatzes anpaßt.

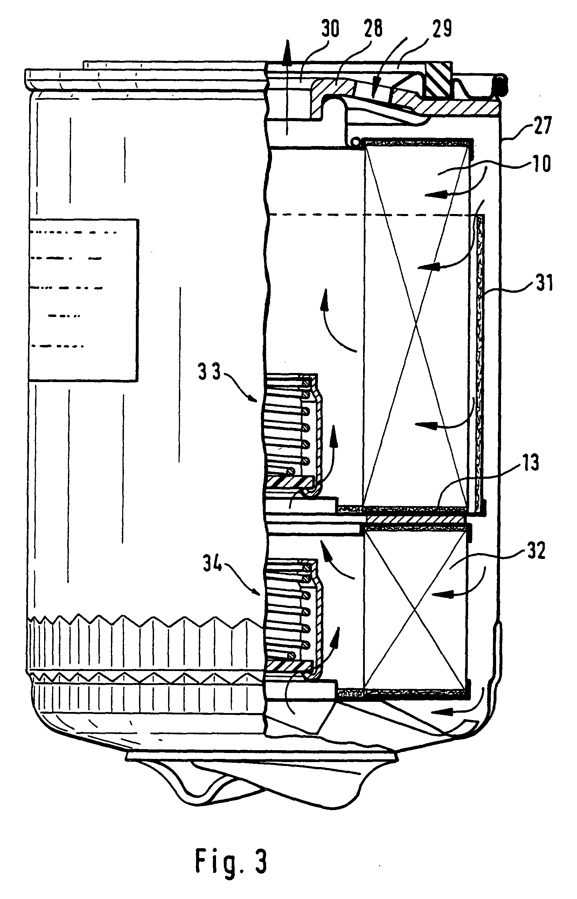

Figur 3 zeigt eine Teilschnittdarstellung eines Wechselfilterelements. Dieses Wechselfilterelement besteht aus einem Gehäuse 27 mit einer Grundplatte 28. Über diese Grundplatte 28 ist das Wechselelement an eine Anschlußplatte anschraubbar. Die zu filternde Flüssigkeit gelangt über einen Rohflüssigkeitseintritt 29 in das Filter. Die gereinigte Flüssigkeit tritt an der Mittelöffnung 30 aus. Ein solches Wechselelement wird sowohl zur Reinigung von Öl bei Verbrennungskraftmaschinen als auch zur Reinigung von Benzin oder Dieselkraftstoff verwendet. Innerhalb des Gehäuses 27 befindet sich ein erster Filtereinsatz 10. Dieser ist ein Feinfilter und besteht aus einem Papier- oder Siebgewebe. Mit der unteren Endscheibe 13 des Filtreinsatzes 10 ist ein Schmutzsammelrohr 31 verbunden. Auch hier wird der Grobschmutz in dem durch das Schmutzsammelrohr 31 gebildeten Auffangraum zurückgehalten.

Es ist weiterhin ein Zuschaltfilter 32 vorgesehen. Dieses besteht aus einem Papier- oder Siebgewebe und dient zur Filtrierung der Flüssigkeit in den Fällen, in denen der Filtereinsatz 10 bereits sehr stark verschmutzt ist oder die zu filternde Flüssigkeit eine anfängliche hohe Viskosität aufweist, die eine Filtrierung über das Feinfilter des Filtereinsatzes 10 nicht zuläßt.

Sowohl der Filtereinsatz 10 als auch das Zuschaltfilter 32 ist mit einem Ventil ausgestattet. Das Ventil 33 ist beispielsweise derart eingestellt, daß es bei einem Öffnungsdruck von 0,5 bar öffnet. Dies bedeutet, daß das Zuschaltfilter 32 dann wirksam wird, wenn die Druckdifferenz zwischen Rohflüssigkeitsseite und Reinflüssigkeitsseite 0,5 bar beträgt. Das Ventil 34 innerhalb des Zuschaltfilters 32 ist für einen Öffnungsdruck von 1 bar ausgelegt. Dieses ist ein Umgehungsventil zur Umgehung des Filterelements und wird insbesondere dann aktiv, wenn bei zu kalter Flüssigkeit und entsprechend hoher Viskosität eine Filtrierung der Flüssigkeit kurzfristig nicht möglich ist.

Der Vorteil des hier gezeigten Aufbaus liegt darin, daß Schmutz - beim aktiv werdenden Zuschaltfilter - nicht vom Feinfilter abgeschwemmt werden kann. Dadurch wird verhindert, daß der ausgefilterte Feinschmutz über den etwas gröberen Zuschaltfilter den Lagerstellen zugeführt wird. Außerdem wird verhindert, daß Grobschmutz aus dem Feinfilter die Standzeit des Zuschaltfilters belastet.

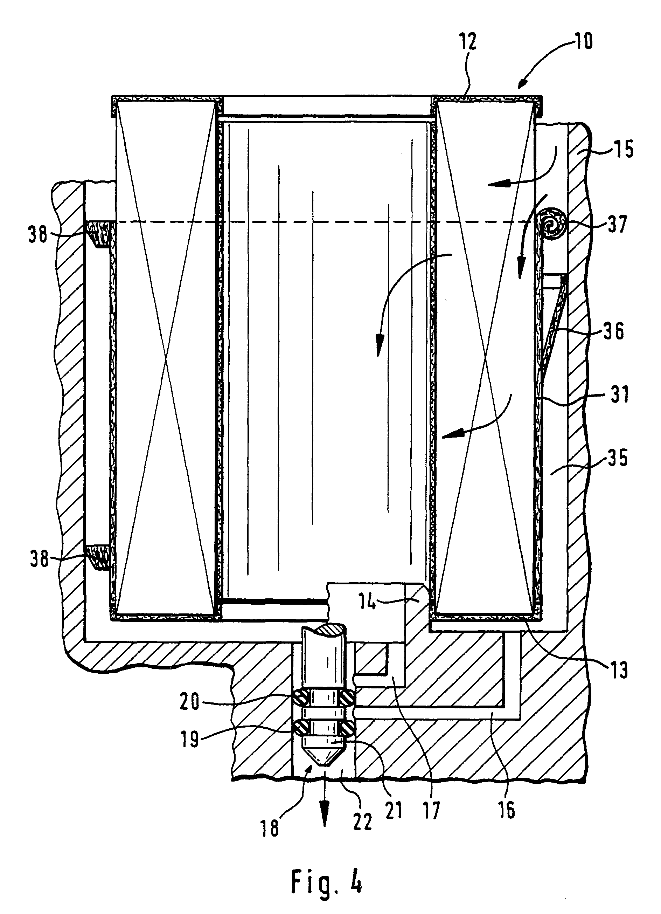

In Figur 4 ist ein Filtereinsatz 10 gezeigt, der ein Schmutzsammelrohr 31 aufweist, welches an der unteren Endscheibe 13 befestigt ist. Zur Verhinderung des Eindringens von Schmutz in den Zwischenraum 35 zwischen dem Filtereinsatz 10 und dem Filtergehäuse 15 sind verschiedene Varianten von Auffangelementen dargestellt. Das Schmutzsammelrohr 31 kann beispielsweise mit einem Trichterring 36 ausgestattet sein. Es besteht auch die Möglichkeit, das Schmutzsammelrohr 31 an seinem oberen Ende umzubördeln (Bördelrand 37). Im linksseitigen Halbschnitt der Figur 4 ist ein Vliesring 38 gezeigt. Auch dieser verhindert ein Eindringen von Schmutz in den unteren Zwischenraum. Es besteht die Möglichkeit, diesen Vliesring 38 im oberen Bereich des Schmutzsammelrohrs 31 anzuordnen. Der Vliesring 38 ist beispielsweise mit dem Schmutzsammelrohr 31 ultraschallverschweißt.

## Patentansprüche

1. Filter, insbesondere Flüssigkeitsfilter mit einem im wesentlichen konzentrischen, zickzack-förmig gefalteten Filtereinsatz (10), welcher radial von außen nach innen durchströmt ist und an seinen Stirnseiten Endscheiben aufweist, mit einem Filtergehäuse, einem Rohflüssigkeitszulauf (29) und einem Reinflüssigkeitsauslauf (30), wobei an dem Filtereinsatz ein Auffangraum für Grobschmutz vorgesehen ist, dadurch gekennzeichnet, daß sich von der geodätisch unteren Endscheibe (13) ausgehend ein an dem Filtereinsatz (10) eng anliegendes oder verklebtes Rohr (31) bis wenigstens zur halben Länge des Filtereinsatzes (10) erstreckte, das den Auffangraum begrenzt und im oberen Bereich Zulauföffnungen (26) aufweist oder offen ist, so daß dadurch maximal mögliche Grobschmutzteile dem Filtereinsatz zugeführt werden kömmen.

2. Filter nach Anspruch 1, dadurch gekennzeichnet, daß das Rohr (31) aus einem feinmaschigen Siebgewebe, feinporigen Papier oder flexiblen feinporigen Vlies besteht mit einer Porenweite ähnlich der des Filtermaterials des Filtereinsatzes, so daß ein Austritt vom im Rohr (31) gesammelten Grobschmutz verhindert wird.

3. Filter nach Anspruch 1, dadurch gekennzeichnet, daß das Rohr (31) aus einem Lochblech oder gelochter Pappe besteht.

4. Filter nach einem der vorhergehenden Ansprüche, dadurch gekennzeichnet, daß unterhalb des Filtereinsatzes (10) ein Zuschaltfilter (32) vorgesehen ist und ein Mindestdruckventil (33) angeordnet ist, welches das Zuschaltfilter (32) bei einem bestimmten Differenzdruck zwischen der Rohflüssigkeitsseite und der Reinflüssigkeitsseite aktiviert.

5. Filter nach einem der vorhergehenden Ansprüche, dadurch gekennzeichnet, daß im Gehäuse ein Bodenablaufventil (18) vorgesehen ist, welches sich bei der Entnahme des Filtereinsatzes (10) öffnet.

6. Filtereinsatz, insbesondere zur Verwendung in einem Filter gemäß Anspruch 1, wobei dieser im wesentlichen aus einem zickzack-förmig gefalteten Filtermaterial besteht und konzentrisch ausgebildet ist, wobei an seinen Stirnseiten Endscheiben (12, 13) angeordnet sind, dadurch gekennzeichnet, daß ausgehend von der geodätisch unteren Endscheibe (13) sich ein an dem gefalteten Filtermaterial eng anliegendes oder verklebtes Rohr (23, 31) bis wenigstens zur halben Länge des gefalteten Filtermaterials nach oben erstreckt, wobei dieses Rohr (23) im oberen Bereich Zulauföffnungen aufweist oder offen ist, so daß dadurch maximal mögliche Grobschmutzteile dem Filtermaterial zugeführt werden können.

7. Filtereinsatz nach Anspruch 6, dadurch gekennzeichnet, daß das Rohr (23) ein feinmaschiges Siebgewebe, flexibles Vlies oder Papier mit einer Porenweite ähnlich der des Filtermaterials ist, so daß ein Austritt vom im Rohr gesammelten Grobschmutz verhindert wird.

8. Filtereinsatz nach Anspruch 6, dadurch gekennzeichnet, daß das Rohr (23) mit der Endscheibe fest verbunden ist.

9. Filtereinsatz nach einem der Ansprüche 6-8, dadurch gekennzeichnet, daß an dem Rohr (31) ein Auffangelement (36, 37, 38) angeordnet ist.

## Claims

1. Filter, more especially a liquid filter device, including a substantially concentric filter insert (10), which is folded in a zigzag-shaped manner, said insert being traversed radially inwardly from outside and having end plates on its end faces, said filter including a filter housing, an unfiltered liquid inlet (29) and a filtered liquid outlet (30), a collecting chamber for coarse contaminants being provided on the filter insert, characterised in that a tube (31), which closely abuts the filter insert (10) or is adhered thereto, extends from the geodetically lower end plate (13) to at least half the length of the filter insert (10), which tube defines the collecting chamber and has inlet apertures (26) in the upper region or is open, so that the maximum possible coarse contaminant particles can thereby be supplied to the filter insert.

2. Filter according to claim 1, characterised in that the tube (31) is formed from a fine-meshed filter cloth, fine-pored paper or flexible fine-pored non-woven fabric with a pore width similar to that of the filter material of the filter insert, so that the coarse contaminants, which have accumulated in the tube (31), are prevented from escaping.

3. Filter according to claim 1, characterised in that the tube (31) is formed from a perforated metal sheet or perforated cardboard.

4. Filter according to one of the preceding claims, characterised in that an additional filter (32) is provided beneath the filter insert (10), and a minimum pressure valve (33) is disposed therebeneath, which activates the additional filter (32) when there is a specific differential pressure between the unfiltered liquid side and the filtered liquid side.

5. Filter according to one of the preceding claims, characterised in that a bottom relief valve (18), which opens when the filter insert (10) is removed, is provided in the housing.

6. Filter insert, more especially for use in a filter according to claim 1, wherein said filter is formed substantially from a filter material which is folded in a zigzag-shaped manner and has a concentric configuration, end plates (12, 13) being disposed on the end faces of said insert, characterised in that a tube (23, 31), which closely abuts the folded filter material or is adhered thereto, extends upwardly from the geodetically lower end plate (13) to at least half the length of the folded filter material, this tube (23) having inlet apertures in the upper region or being open, so that the maximum possible coarse contaminant particles can thereby be supplied to the filter material.

7. Filter insert according to claim 6, characterised in that the tube (23) is a fine-meshed filter cloth, a flexible non-woven fabric or paper with a pore width similar to that of the filter material, so that the coarse contaminants, which have accumulated in the tube, are prevented from escaping.

8. Filter insert according to claim 6, characterised in that the tube (23) is securedly connected to the end plate.

9. Filter insert according to one of claims 6 - 8, characterised in that a collecting element (36, 37, 38) is disposed on the tube (31).

## Revendications

1. Filtre, notamment filtre à liquide comprenant une garniture de filtre (10) essentiellement pliée en zig-zag et concentrique, traversée radialement de l'extérieur vers l'intérieur et dont les faces frontales comportent des disques d'extrémité, avec
- un boîtier de filtre, une alimentation de liquide non filtré (29) et une sortie de liquide filtré (30),
- la garniture de filtre ayant un volume de réception pour des saletés grossières,
caractérisé en ce que
partant du disque d'extrémité inférieur géodésique (13), un tube (31) étroitement appliqué ou collé contre la garniture de filtre (10), arrive au moins jusqu'à la moitié de la longueur de la garniture de filtre (10), ce tube délimite la chambre de réception et comporte en zone supérieure des orifices d'arrivée (26) ou y est ouvert pour qu'ainsi un maximum de particules grossières de saleté puisse arriver dans la garniture.

2. Filtre selon la revendication 1,
caractérisé en ce que
le tube (31) est en un tissu formant tamis à mailles fines, en papier à pores fins ou en non tissé souple à pores fins, avec une taille de pores analogue à celle de la matière de la garniture de filtre pour éviter que des saletés grossières accumulées dans le tube (31) ne s'échappent.

3. Filtre selon la revendication 1,
caractérisé en ce que
le tube (31) est une tôle perforée ou un trou perforé.

4. Filtre selon l'une des revendications précédentes,
caractérisé en ce qu'
en dessous de la garniture de filtre (10), il est prévu un filtre complémentaire (32) et une soupape de pression minimale (33) qui active le filtre complémentaire (32) pour une différence de pression définie entre le côté de liquide brut et le côté de liquide filtré.

5. Filtre selon l'une des revendications précédentes,
caractérisé en ce que
le boîtier comporte dans le fond une vanne de sortie (18) qui s'ouvre lorsqu'on extrait la garniture de filtre (10).

6. Garniture de filtre notamment applicable à un filtre selon la revendication 1, qui se compose essentiellement d'une matière filtrante pliée en zigzag et concentrique, avec des disques d'extrémité (12, 13) prévus sur ses faces frontales,
caractérisée en ce que
partant de la rondelle d'extrémité (13) inférieure géodésique, un tube (23, 31) s'étend vers le haut jusqu'à au moins la moitié de la hauteur de la matière filtrante pliée en étant appliqué étroitement ou collé contre la matière filtrante, et ce tube (23) en partie haute comporte des orifices d'arrivée ou est ouvert, de sorte qu'ainsi un maximum possible de particules de saletés grossières arrive dans la matière filtrante.

7. Garniture de filtre selon la revendication 6,
caractérisée en ce que
le tube (23) est un tissu formant tamis à mailles fines, un non tissé souple ou du papier avec une largeur de pores analogue à celle de la matière filtrante, pour interdire la sortie de saletés grossières accumulées dans le tube.

8. Garniture selon la revendication 6,
caractérisée en ce que
le tube (23) est relié solidairement au disque d'extrémité.

9. Garniture selon l'une quelconque des revendications 6 à 8,
caractérisée en ce qu'
un élément de réception (36, 37, 38) est prévu sur le tube (31) .
